# EUROPEAN PATENT APPLICATION

(11) **EP 2 383 467 A2**
(43) Date of publication of application: **02.11.2011**
(21) Application number: 11163974.6
(22) Date of filing: 27.04.2011
(51) Int. Cl.: F03D 7/02

(54) **Friction brake for wind energy systems, wind energy system and method for upgrading**

(30) Priority: 30.04.2010 US 771187
(71) Applicant: General Electric Company, Schenectady, NY 12345 (US)
(72) Inventor: Neumann, Ulrich, Simpsonville, SC 29681 (US)
(74) Representative: Bedford, Grant Richard

(57) **Abstract**

A friction brake (100) is provided for use in a wind energy system (10). The friction brake includes a piston (101) adapted for being at least temporarily in contact with a braking surface, the piston having an outer circumferential surface (103) that comprises a outer contact area (105). Further, the piston brake includes a housing (102) for housing the piston (101), the housing having an inner surface (104) that comprises a inner contact area (106) wherein the inner contact area (106) and the housing area (105) are adapted for temporarily being in contact with each other. At least one of the inner contact area (106) and the housing area (105) is made of a non-metallic material. In addition, a wind energy system and a method for upgrading a wind energy system is provided.

## Description

The present disclosure relates generally to a friction brake for use in a wind energy system and to a wind energy system. In particular, the present invention relates to a piston friction brake for use in wind energy systems. Further, the present invention relates to a method for upgrading a friction brake of a wind energy system.

Wind energy systems are becoming more and more an important factor in reaching economical and ecological goals in power production. In a wind energy system, power is produced by a wind turbine that is driven by the wind and transmits its force to a power generator.

The plane defined by the blades is normally arranged perpendicularly to the wind direction in order to optimize the efficiency of power generation. This way, not only the energy yield is maximized but also the loads on the wind energy system components such as the blades are minimized.

Due to the fact that the wind direction changes over time, wind energy turbines are provided with a drive for adapting the orientation of the rotor blade plane. This drive is normally called the yaw or azimuth drive and is, in many cases, arranged between the top of the tower and the nacelle.

A friction brake can be used in order to slow down the movement of the nacelle and/or to fix the position of the nacelle, for example, after the nacelle has been moved for a better orientation of the rotor blades.

However, friction brakes used in the art sometimes result in the generation of vibrations that are audible over long distances. The vibrations transfer from the brake to the structure of the turbine. Thereby, it can happen that the turbine emits a loud, fog-horn like noise that may disturb neighbors. In addition, it may cause concern to those hearing the noise that the wind energy system is damaged in some way. From a technical viewpoint, these vibrations also harm the turbine in the long run by increasing the overall wear and tear of the system.

In light of the above, according to one aspect of the present invention, a friction brake is provided for use in a wind energy system. The friction brake includes a piston adapted for at least temporary contact with a braking surface. The piston has an outer circumferential surface that comprises an outer contact area and a housing for said piston. The housing has an inner surface that includes an inner contact area. The inner contact area and the outer contact are adapted for at least temporary contact with each other, wherein at least one of said inner contact area and said outer contact area is comprised of a non-metallic material.

According to another aspect, a wind energy system having a tower for supporting a nacelle wherein the nacelle is rotatable with respect to the tower by an azimuth drive system, the azimuth drive system having a friction brake as described herein.

According to another aspect, a method for upgrading a friction brake of a wind energy system for avoiding oscillations of the friction brake, the friction brake including a housing for a piston, the piston including an outer surface, the housing including an inner surface. The method includes applying a non-metallic surface to at least one of the piston surface and the housing inner surface.

According to another aspect, a replaceable friction lining that is mounted to a piston of a friction brake is provided.

According to another aspect, a friction brake is provided having a replaceable friction lining as described herein.

Various advantages, features, aspects and details that can be combined with embodiments described herein are evident from the dependent claims, the description and the drawings, in which:
Fig. 1 shows a schematic view of parts of a wind energy system;
Fig. 2 shows a cross sectional view of an embodiment of a friction brake as described herein;
Fig. 3 shows a cross sectional view of an embodiment of a friction brake having one guide band as described herein;
Fig. 4A and 4B show cross sectional views of embodiments of a friction brake having two guide bands as described herein;
Fig. 5 shows a cross sectional view of an embodiment of a friction brake as described herein;
Fig. 6 shows a cross sectional view of an embodiment of a friction brake described herein having guide bands attached to the housing;
Fig. 7 shows a three-dimensional view of an embodiment as described herein;
Fig. 8A and Fig. 8B show schematic cross sectional views of embodiments described herein with the cross sectional axis being perpendicular to the cross sectional axis of Figs. 2 to 5;
Fig. 9 shows a friction lining according to embodiments as described herein.

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

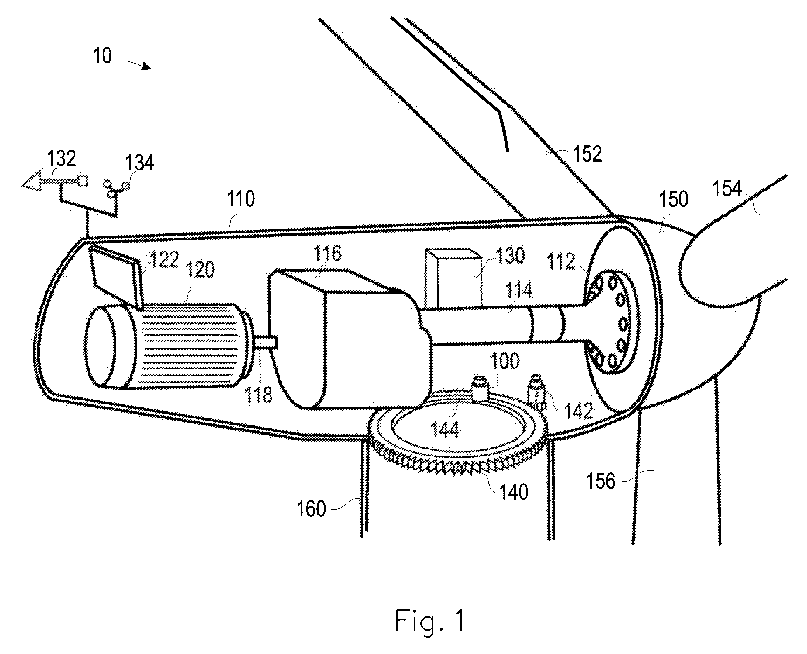

Within the following description of the drawings, the same reference numbers refer to the same components. Generally, only the differences with respect to the individual embodiments are described. The structures shown in the drawings are not depicted true to scale but rather serve only for the better understanding of the embodiments. Fig. 1 illustrates exemplarily parts of a wind energy system in which embodiments described herein may be used. The wind energy system 10 includes a nacelle 110, of which a schematic, perspective, cut-open view is shown. The nacelle 110 houses a main shaft 114, a gearbox 116, a generator shaft 118, and a generator 120 with a cooling system 122 for cooling the generator. The main shaft 114 includes a rotor connection portion 112 for connecting a rotor thereto. Typically, a rotor includes three blades 152, 154, 156 connected to a hub 150. Typically, the main shaft 114 is a low speed shaft, while the generator shaft 118 is, by transmission of the gearbox 116, a high speed shaft adapted for driving the generator 120.

Generally, a main drive train of the wind energy system includes the mechanical parts transmitting the forces created by the rotor to the generator. In operation, the main drive train has kinetic energy, typically in form of rotational energy. In Fig. 1, the main drive train includes the main shaft 114, the gearbox 116 and the generator shaft 118. In some embodiments, the main drive train also may include the generator and/or the hub. Moreover, embodiments described herein may be used in other kinds of wind energy systems, e.g. in wind energy systems including direct drive main drive trains, i.e. gearless main drive trains, or hybrid main drive trains providing only some level of gearing such as one or two stages.

Generally, embodiments described herein may be used in any kind of energy system with horizontal axis wind turbine. Typically, these energy systems are upwind machines. The energy systems may include rotors with any number of rotor blades such as one, two, three or more blades. The energy systems may include variable-speed wind turbines or, alternatively, constant-speed wind turbines. Gearboxes may include mechanical or hydraulic speed transmission systems.

Further, a wind energy system 100 may, as shown in Fig. 1, include a wind vane 132 for determining the direction of the wind and an anemometer 134 for determining the wind speed. Information about the wind direction and the wind speed may be transmitted to an electronic controller 130, e.g. a computer.

According to embodiments described herein, the wind energy system includes elements that are stationary in position and orientation. These elements are, for instance, the foundation and the tower of the wind energy system. Other elements of the wind energy system are movable, typically rotatable. For instance, a wind energy system as described herein is capable of orienting the rotor blade plane perpendicular to the horizontal of the wind direction. In order to do so, the rotor blades, typically along with the hub and the main drive train, can be moved. In general, they are rotated with respect to the stationary part of the wind energy system.

In many embodiments, the nacelle is typically placed upon a tower 160 of the wind energy system with the nacelle being rotatable with respect to the tower. The nacelle is rotated by means of an azimuth drive system. The azimuth drive system includes a yaw bearing 140. The yaw bearing 140 may include a gearwheel. In Fig. 1, the yaw bearing 140 is schematically depicted by a gearwheel. The electronic controller 130, using information about the wind direction and the wind speed, typically controls a drive for pivoting the nacelle such as an electric or a hydraulic yaw motor 142 for adjusting the yaw of the nacelle 110. The yaw motor may turn the nacelle such that the rotor blade plane faces the wind. The electric yaw motor 142 may include a gearwheel for engaging with a co-operating gearwheel of the yaw bearing 140. Further, a friction brake 100 may engage the gearwheel.

In the following, embodiments are described by the example that the azimuth drive system, in particular the friction brake, is arranged between the tower and the nacelle. However, other embodiments are equally possible and are within the scope of the present disclosure.

Typically, braking in the azimuth yaw drive is undertaken in two different ways. One way is by the yaw motor(s) themselves. Typical wind energy systems as described herein comprise a multitude of at least two or even four yaw motors. Each yaw motor has typically an internal brake that is lifted only if the yaw motor is activated.

In addition, a wind energy system as described herein includes at least one friction brake 100. The at least one friction brake may be mounted to the movable system such as the nacelle. Mounting of the friction brake is not shown in Fig. 1. The friction brake includes a friction lining for contacting a further system that can move with respect to the friction brake. The friction lining is supposed to contact the braking surface, that is, in the embodiment of Fig. 1, the bearing surface 144 of the yaw bearing. The yaw bearing as shown in Fig. 1 is part of the stationary system; it can be fixed to the tower.

According to embodiments described herein, at least twelve, more typically at least 15 or even 18 friction brakes are provided. Normally, the friction brakes operate independently from each other. According to the embodiment in Fig. 1, the friction brake is situated in the moving system and interacts with the stationary system via its friction lining. It is also possible that the friction brake is mounted to the stationary system and interacts with the movable system of the wind energy system. Generally, the friction brakes are adapted for being in contact with the part moving in relation to the friction brake all the time. In other words, the friction brake exerts a brake force even at those times where the yaw drives are activated in order to rotate the nacelle. Hence, the nacelle is fixedly oriented even at gusty winds.

In many embodiments, the blades are arranged such that they define a plane which is normally essentially vertically oriented. "Essentially "and "substantially" as used herein are understood as including a deviation of 10% at maximum, typically 5% at maximum. That is, in the example of "vertically", "essentially vertically" comprises a deviation from the vertical axis of 10% at maximum.

In order to orientate the rotor blade plane perpendicularly to the horizontal direction of the wind direction, a yaw drive is typically provided as part of the azimuth drive system. By activating the yaw drive, the nacelle is rotated. A break is employed in order to avoid undesired movement of the nacelle. When the yaw drive is activated, it has to work against the braking force of the friction brakes and, if necessary, against the force exerted by the wind. Once the orientation of the rotor blade plane is as desired, the nacelle is fixed at this position.

In order to decrease the rotational speed and/or to fix the nacelle at an azimuth position, typical wind energy systems include a friction brake cooperating with the yaw drive. The friction brake may act directly on the yaw bearing on which the drive acts upon as well.

Under certain circumstances, the friction lining in friction brakes known in the art can encounter slip-stick or stiction, thus a disrupted sliding motion. In this case, vibration of the friction brake occurs which transfers via the steel housing for the piston into the structure of the turbine. This vibration causes a loud noise that is audible over a long distance.

In view of the above, a friction brake is disclosed. The friction brake for use in the azimuth drive system of a wind energy system is used for braking the azimuth movement of the nacelle and for fixing the nacelle at a certain position. A friction brake as disclosed herein is adapted for exerting a braking force in the range of 10 kN and 80 kN, more typically more than 16kN and/or less than 60 kN. The braking force may depend on the lining used.

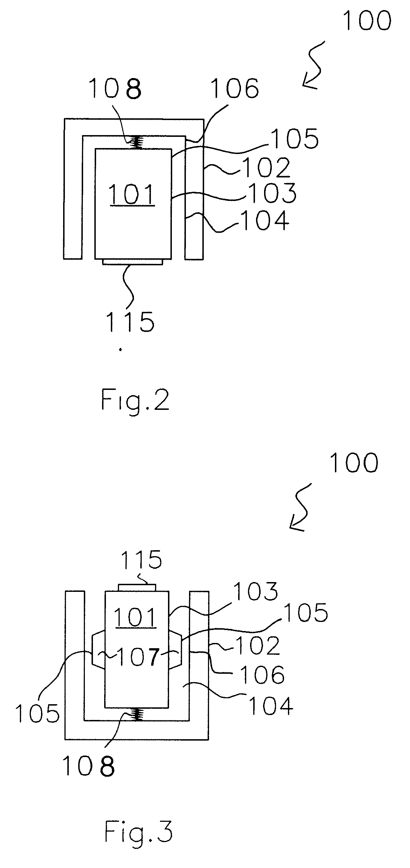

Fig. 2 shows a schematic view of a friction break according to embodiments described herein. The friction brake includes a piston 101 which is typically movably arranged within a piston housing. Suitably, the piston is movable along the longitudinal axis of the housing. The piston 101 comprises a circumferential surface 103. The circumferential surface is understood as the area radially positioned along the axial dimension of the piston. Typically, the piston has the shape of a cylinder. This circumferential surface of the embodiment of Fig. 2 is planar.

The friction brake 100 further includes housing 102 for the piston 101. The housing guides the piston for application of the braking force. The housing 102 includes an inner surface 104 that is oriented towards the outer surface of the piston. In other words, the outer circumferential surface of the piston and the inner surface of the housing are facing each other.

The circumferential surface 103 of the moveable piston 101 comprises an outer contact area 105. Further, the inner surface 104 of the housing 102 comprises an inner contact area 106. The contact areas may contact each other in order to guide the piston within the housing. The "contact" as understood herein includes the situation that the contact areas temporarily touch each other. However, it is typical that there is little friction between the contact areas. Further, it is not intended that the contact areas are attached to each other.

In the embodiment shown in Fig. 2, the outer contact area 105 of the moveable piston 101 is identical to the circumferential piston surface 103. Equally, the inner contact area 106 is identically to the inner surface 104 of the housing 102. However, in embodiments described in more detail below, at least one contact area may be elevated with respect to the surrounding surface.

In addition, the friction brake 100 of the embodiments illustrated in Fig. 2 comprises a friction lining 115. The friction lining is supposed to get in contact with the braking surface against which the braking effect shall be effectuated. For instance, in the embodiment as exemplarily described with respect to Fig. 1, the friction lining touches the bearing surface 144. Generally, the surface that the piston, typically the friction lining of the piston, is supposed to touch in order to brake shall be called "braking surface" herein.

In order to press the piston against the surface, a pressing unit 108 may be provided. The pressing unit 108 may be, for instance, a spring, a rubber, a biased plate, or the like. Typically, the pressing unit presses the piston with a predetermined force against the braking surface. In other embodiments, the pressing unit may be controlled e.g. by electronic means so that the pressing unit exerts a controllable force. For instance, the pressing unit may be a hydraulic piston or an electric motor so that the force effectuated can be controlled manually by a user or automatically by an electronic control. Depending on the force the piston is pressed towards the braking surface, a breaking force is exerted and transmitted to the moveable system that is in touch with the friction brake.

Typical materials used for the friction lining are polyester materials, typically including one ore more of polyester resin, epoxy resin, polytetrafluoroethylene (PTFE) or the like. Generally, the material of the friction lining is chosen such that it provides a high shear strength, typically in the range of 75 N/mm² and 100 N/mm², and/or a high coefficient of friction, typically in the range of 0.09 to 0.35. Thereby, efficient braking and increased life time of the friction lining is guaranteed.

According to an aspect, the contact between the moveable piston 101 and the housing 102 is comprised of a non-metallic material. In other words, at least one of the outer contact area 105 or the inner contact area 106 is comprised of a material that is non-metallic.

The non-metallic material is to be understood as including non-metallic material. According to some embodiments, the non-metallic material contains metallic material at a ratio of less than 25% per weight, specifically less than 15% per weight, and even more specifically less than 5% per weight.

For instance, it may be possible that the non-metallic material is an organic binder, such as a resin, which had been mixed with some metallic parts, such as iron cuttings. The composition of resin and iron cuttings is vitrified or hardened, thereby typically applying high pressure. The resulting material results in a reduced vibration of the break. At the same time, some metallic add-ons to the non-metallic material may increase the lifetime and durability of the break.

The embodiment shown in Fig. 2 illustrates the piston as a one-piece cylinder that is comprised of a non-metallic material, for instance, made of a composite material, in particular a glass fiber reinforced material (e.g. a thermoplastic) such as a high strength fiber glass reinforced injection molded plastic (e.g. a polyphthalamide such as Amodel^{®} polyphthalamide). Generally, it would also be possible that the piston is made of a metal and the housing 102 is comprised of a non-metallic material such as a composite material mentioned previously.

In typical embodiments, the non-metallic material as used herein is a high performance composite material. A high performance composite material is understood as one that can resist the high mechanical static and dynamic stresses placed upon it during normal operation without showing the tendency to creep or deform over time as is commonly observed with regular plastic materials. For instance, the material may be chosen from the materials mentioned previously. Generally, the material is chosen in dependence of its mechanical strength, its wear resistance and a consistent coefficient of friction.

As in the embodiment of Fig. 2, the moveable piston may be made completely of a non-metallic material such as a composite material, it is not necessary to provide for a special coating of the outer contact area, or to provide for separate guide bands as it will be shown with respect to the embodiments of Figs. 3 to 5. In addition, and not limited to this embodiment, the bottom of the piston itself may serve as friction lining 115 so that it is not necessary to provide for another coating or layer. In the case of a one-piece non-metallic piston, the bottom of the piston may act as the friction lining 115.

The embodiment illustrated with respect to Fig. 3 comprises an elevated housing contact region 105. Further, without attributing any meaning or importance to it, the schematic orientation of the friction brake is rotated at 180° with respect to the friction brake shown in Fig. 2.

For instance, a guide band 107 surrounding the complete piston may be mounted to the piston in order to provide for this elevated contact region. In general, and not limited to this embodiment, mounting of guide bands to the piston may be performed by one or more of gluing, bonding, in particular adhesive bonding, screwing etc. or by installing the guide band in a circumferential recess such as a groove dimensioned such that the guide band is safely retained without a chance of exiting the recess during operation. The guide band may be arranged such that is can move within the recess but cannot exit the recess. This might ease mounting and/or replacing the guide band.

The typical thickness of the guide band is between 1 mm and 10 mm, typically between 1 mm and 5 mm. The typical width of the guide band is between 1 cm and 10 cm, more typically between 2 cm and 7 cm. In typical embodiments, the guide band is made of a non-metallic material such as a composite material, e.g. a high performance composite material as mentioned previously.

Typically, the piston as disclosed herein is provided with at least two guide bands 107 surrounding the piston outer surface. By providing two or more guide bands, a outer contact area is divided in two or more contact sub areas separated from one another. Typical separation distances are in the range of between 5 cm and 15 cm. By providing separated contact sub areas, the stability of the piston within the housing is increased so that the piston is guided more smoothly and steadily within the housing. Maximum stability and resistance against radial side-to-side motion or canting is reached.

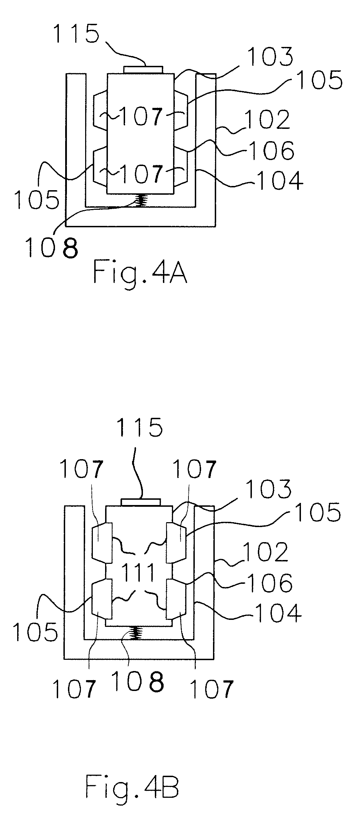

Fig. 4A is an illustration exemplarily showing an embodiment with two guide bands 107 thereby providing a outer contact area 105 including two housing contact sub areas.

It is possible to mount the guide bands to a piston, the outer surface of which is the surface of a regular cylinder. This is shown in the embodiments of Figs. 3 and 4A. It is also possible to provide one or more recesses in the piston that are supposed to be partly or completely filled with the one or more guide bands. This is exemplarily shown in Fig. 4B. Typically, the recesses 111 surround the complete outer piston surface. They may have the shape of a groove, a notch, a slot, a channel, or the like.

The depth of the recesses is typically chosen to safely retain the guide band. The depth of the recess is typically between 1/4 to 2/3, more typically between 1/3 to 1/2 of the thickness of the guide band. According to embodiments, the depth of the recess is between 1 mm and 3 mm, more typically between 1.3 mm and 2 mm to assure a save seating of the guide band in the recess. Additional means of fastening the guide bands in the recesses like gluing or bonding is possible. The width of the recesses has to be such that the guide band is allowed to properly seat and to assure the desired function.

In typical embodiments, the width of the recesses is constant over the height. This allows easy introduction of the guide bands and provides for a sufficient stability of the guide bands after gluing or the like. In alternative embodiments, the recesses have the shape of a V, i.e. the width decreases with increasing depth.

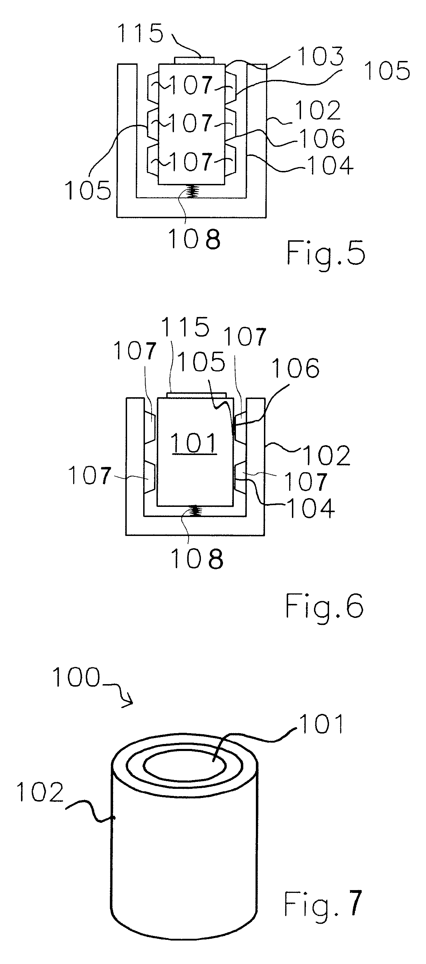

The number of guide bands is typically between two and five. An example of three guide bands is shown in Fig. 5.

Typically, the guide bands are made of a non-metallic material and are attached to the piston which is made of a metallic material. In addition, typically, also the housing is made of a metallic material. Normally, the piston can be made of bronze typically used to avoid corrosion. However, given the fact that this is a rather expensive material, due to the present disclosure, it is no longer necessary to make the piston of bronze. Instead, the piston can be made of cast iron or the like. This reduces the production costs and due to the non-metallic contact area, there is no danger of corrosion between the piston and the housing which is normally made of steel, cast iron, or the like.

Separating the bushing and the piston by providing e.g. guide bands on the circumferential of the piston eliminates the inter-metal corrosion allowing the use of a cheaper material such as cast iron for the piston. In addition, given the non-metallic contact between piston and housing, there are no vibrations any more that lead to loud noises generated from the wind energy system.

Alternatively to providing guide bands in the piston, it is also possible to provide the housing with at least one, typically two guide bands at the housing. These guide bands may be attached to the inner surface of the housing thereby providing for an elevated inner contact area. This is exemplarily illustrated in Fig. 6. It is also possible to provide the guide bands in one or more recesses of the housing.

Fig. 7 is a schematic three dimensional view of the friction brake 100 according to embodiments comprising the piston 101 and the housing 102. In the view of Fig. 7, the friction lining is at the bottom of the piston, i.e. at the bottom of the drawing.

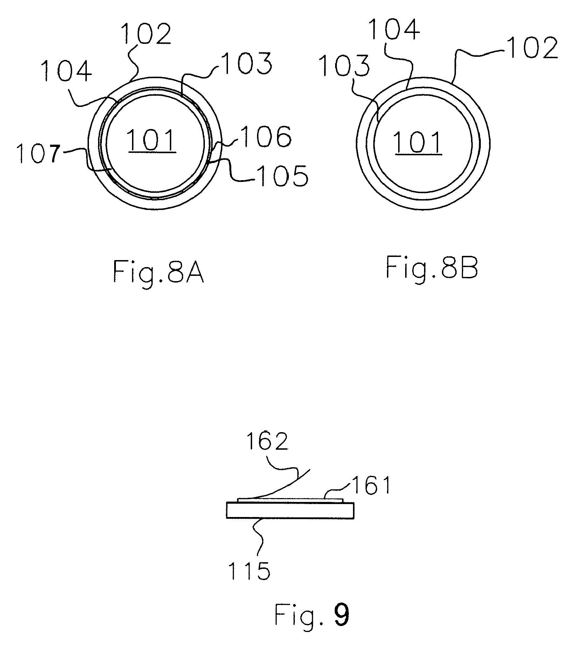

Figs. 8A and 8B are cross-sectional views of the friction brake according to the present disclosure wherein the cut is perpendicular to the cut of the embodiments shown in Figs. 2 to 6. The moveable piston is recognizably positioned in the middle of the friction brake. For example, the figures could refer to a friction brake wherein the piston has two guide bands for shaping the elevated contact area. The cut as shown in Fig. 8A is through the housing contact region 105 and the piston contact region 106. Therefore, there is almost no gap between the piston and the housing. It is possible to see the elevated guide band 107 attached to the piston.

The cut of Fig. 8B is at a height of the friction brake where there is no contact between piston and housing. It is recognizable that there is a gap between the outer surface 103 of the piston and the inner surface 104 of the housing 102.

The embodiment of Fig. 9 shows the friction lining in more detail. Generally, the friction lining as described herein is replaceable. If the lining is worn off, the maintenance operator of the wind energy turbine can replace the old friction lining. For example, one may firstly remove the worn off lining, secondly clean the bottom of the piston, and thirdly attach the new friction lining to the bottom of the brake piston.

For replacing the friction lining, the friction lining may be provided with an adhesive layer as it is exemplarily shown in Fig. 9 and denoted with reference number 161. The adhesive layer allows gluing the friction lining to the piston bottom. The adhesive layer may be a double-faced adhesive tape that may be pre-attached to the replaceable friction lining 115. In that case, the side opposite to the friction lining, i.e. the side that is supposed to contact the bottom of the piston, may comprise a protective layer that is peelable. This is exemplarily shown in Fig. 9 and denoted with reference number 162.

Typical materials for the friction lining are composite materials, in particular high performance composite materials such as made from Polyester cloth and Polyester resin having a certain amount of low friction material woven into the wear surface such as polytetrafuorethylen (PTFE) to control the coefficient of friction, assure a smooth sliding action without sticktion and to improve the wear life of the lining. Further possible materials have been mentioned previously with respect to the one-piece piston.

In comparison to traditional brake pistons having the friction lining permanently glued to the bottom of the piston, the use of a replaceable friction lining leads to a reduction of the maintenance and replacement costs. It is no longer necessary to replace the complete piston but only the friction lining. The friction lining can be replaced on the spot. Materials as proposed herein have satisfactory abrasion resistance resulting in a prolonged service life. In addition, experiments have revealed that the proposed replaceable friction lining does not show any cracking or braking in the surface or on the edges.

A friction brake combining the provision of a non-metallic contact surface and the replaceable friction lining reduces the production costs, avoids the oscillation and noise generation, and minimizes maintenance costs. The service life is prolonged.

According to various embodiments, it is possible to attach one or more guide bands to an existing friction brake. Thereby, it might be necessary to reduce the diameter of the piston. Additionally or alternatively, recesses such as grooves may be provided in existing pistons or housings for receiving the guide bands.

The material of the outer contact area and the inner contact area is chosen such that a vibration does not occur and that there is little friction between the two areas once the piston is moved. Composite materials as set forth previously provide low sliding friction. The gap between the contact areas is typically desired to be very small (near zero) thus reducing the possible lateral movement of the piston. According to embodiments, the gap between the contact areas is typically below 1.0 mm, more typically below 2/3 mm, and even more typically below 0.5 mm.

In comparison to a one-piece piston, the outside diameter of the brake piston is smaller if guide bands are attached to it. Therefore, a method of upgrading an existing piston typically includes reducing the piston diameter and attaching one or more guide bands to the outer surface of the piston or the inner surface of the housing. As described, it is further possible to provide one or more recesses in the piston or the guiding bushing. Generally, the number of recesses is normally identical to the number of guide bands.

Various aspects and embodiments of the present invention are defined by the following numbered clauses:
1. A friction brake for use in a wind energy system comprising
   a piston adapted for at least temporary contact with a braking surface, said piston having an outer circumferential surface that comprises an outer contact area;
   a housing for said piston, the housing having an inner surface that comprises an inner contact area;
   said inner contact area and said outer contact are adapted for at least temporary contact with each other,
   wherein at least one of said inner contact area and said outer contact area is comprised of a non-metallic material.
2. The friction brake according to clause 1, wherein said outer contact area is elevated to the adjacent circumferential surface.
3. The friction brake according to any preceding clause, wherein said outer contact area is elevated to the adjacent circumferential surface by about 1.0 mm to 2.0 mm.
4. The friction brake according to any preceding clause, wherein said outer contact area is formed by at least one guide band surrounding said piston.
5. The friction brake according to any preceding clause, wherein said outer contact area is formed by two guide bands surrounding said piston.
6. The friction brake according to any preceding clause, wherein said inner contact area is formed by at least one guide band positioned on the inner surface of said housing.
7. The friction brake according to any preceding clause, wherein said inner contact area is formed by two guide bands positioned on the inner surface of said housing.
8. The friction brake according to any of any preceding clause wherein the at least one guide band is placed in one of said piston or said housing.
9. The friction brake according to any preceding clause, wherein the outer contact area is made of a composite material.
10. The friction brake according to any preceding clause wherein the complete piston is made of a composite material.
11. The friction brake according to any preceding clause wherein the inner surface of the housing is made of a composite material at least in the inner contact area.
12. The friction brake according to any preceding clause further comprising a replaceable friction lining.
13. A wind energy system having a tower for supporting a nacelle wherein the nacelle is rotatable with respect to the tower by an azimuth drive system, the azimuth drive system having at least one friction brake comprising
   a piston adapted for being at least temporarily in contact with a braking surface, said piston having an outer circumferential surface that comprises a outer contact area;
   a housing for housing said piston, the housing having an inner surface that comprises a inner contact area; and
   said inner contact area and said housing area being adapted for temporarily being in contact with each other,
   wherein at least one of said inner contact area and said housing area is made of a non-metallic material.
14. The wind energy system according to any preceding clause, the wind energy system further comprising a yaw bearing wherein the braking surface is part of the yaw bearing.
15. The wind energy system according to any preceding clause, wherein said outer contact area is elevated to the surrounding circumferential surface.
16. The wind energy system according to any preceding clause, wherein said outer contact area is formed by at least one guide band surrounding said piston.
17. The wind energy system according to any preceding clause further comprising a replaceable friction lining.
18. A method for upgrading a friction brake of a wind energy system for avoiding oscillations of the friction brake, the friction brake comprising a housing for a piston, the piston being adapted for being at least temporarily in contact with a braking surface, the piston comprising an outer surface, the housing comprising an inner surface, the method comprising:
   applying a non-metallic surface to at least one of the piston surface and the housing inner surface.
19. The method for upgrading a friction brake according to any preceding clause, further comprising
   reducing the diameter of said piston.
20. The method for upgrading a friction brake according to any preceding clause, further comprising
   shaping at least one recess in said piston.

## Claims

1. A friction brake (100) for use in a wind energy system (10) comprising
a piston (101) configured for at least temporary contact with a braking surface, the piston having an outer circumferential surface (103) that comprises an outer contact area (105);
a housing for the piston (101), the housing having an inner surface (104) that comprises an inner contact area (106);
the inner contact area (106) and the outer contact area (105) configured to provide at least temporary contact with each other,
wherein at least one of the inner contact area (106) and the outer contact area (105) is comprised of a non-metallic material.

2. The friction brake (100) according to claim 1 wherein the outer contact area (105) is elevated to the adjacent circumferential surface with a preferable elevation height of about 1.0 mm to 2.0 mm.

3. The friction brake (100) according to any of the preceding claims wherein the outer contact area is formed by at least one guide band (107) surrounding the piston, preferably by two guide bands.

4. The friction brake (100) according to any of claims 1 to 3 wherein the inner contact area is formed by at least one guide band (107) positioned on the inner surface (104) of the housing, preferably by two guide bands, wherein the at least one guide band is preferably placed in one of the piston (101) or the housing (102).

5. The friction brake (100) according to any of the preceding claims wherein
the outer contact area is comprised of a composite material;
the complete piston (101) is comprised of a composite material; and/or
the inner surface (104) of the housing is comprised of a composite material at least in the inner contact area (106);
with the composite material preferably being a high performance composite material.

6. The friction brake (100) according to any of the preceding claims further comprising a replaceable friction lining (115).

7. A wind energy system (10) having a tower (160) for supporting a nacelle (110) wherein the nacelle is rotatable with respect to the tower by an azimuth drive system, the azimuth drive system having a friction brake according to any of the preceding claims, wherein the braking surface is preferably part of a yaw bearing (140).

8. A method for upgrading a friction brake (100) of a wind energy system (10) for avoiding oscillations of the friction brake, the friction brake comprising a housing for housing a piston, the piston being adapted for being at least temporarily in contact with a braking surface, the piston comprising an outer surface, the housing comprising an inner surface, the method comprising:
applying a non-metallic surface to at least one of the piston surface and the housing inner surface.

9. The method for upgrading a friction brake (100) according to claim 8, further comprising at least one of
reducing the diameter of the piston (101); and/or
shaping at least one recess (111) in the piston (101).

10. A method for upgrading a wind energy system comprising the method for upgrading a friction brake according to any of claims 8 to 9.
